# EUROPÄISCHE PATENTSCHRIFT

(11) **EP 2 721 546 B1**
(45) Veröffentlichungstag und Bekanntmachung des Hinweises auf die Patenterteilung: **25.02.2015**
(21) Anmeldenummer: 11807877.3
(22) Anmeldetag: 08.12.2011
(51) Int. Cl.: G06F 21/00

(54) **SCHUTZEINRICHTUNG**
PROTECTION DEVICE
DISPOSITIF DE PROTECTION

(30) Priorität: 30.12.2010 DE 102010064360
(43) Veröffentlichungstag der Anmeldung: 23.04.2014
(73) Patentinhaber: Robert Bosch GmbH, 70442 Stuttgart (DE); Denso Corporation Ltd., Aichi (JP)
(72) Erfinder: KRAMER, Simon, 74080 Heilbronn (DE); FRAUENSCHLAEGER, Jens, 31188 Holle (DE); SHOKROLLAHI, Jamshid, 76135 Karlsruhe (DE); KOTTSCHLAG, Gerhard, 31139 Hildesheim (DE)
(74) Vertreter: Bee, Joachim
(86) Internationale Anmeldenummer: PCT/EP2011/072157
(87) Internationale Veröffentlichungsnummer: WO 2012/089482

(56) Entgegenhaltungen:
- EP-A2- 0 291 827
- WO-A1-2008/153943
- US-A- 5 406 260
- US-A1- 2008 178 304
- US-A1- 2010 180 350

## Beschreibung

Die Erfindung betrifft ein System, ein Verfahren und ein Computerprogrammprodukt zum Schutz eines mit einem elektrischen Leitungssystem verbindbaren elektrischen Geräts.

### Stand der Technik

Elektrische Geräte sind allgemein dazu eingerichtet, in einer vorbestimmten Umgebung verwendet und beispielsweise im Fehlerfall ausgetauscht zu werden. Dabei umfasst die Umgebung in der Regel eine elektrische Infrastruktur, mit der die Geräte verbunden werden, beispielsweise ein Energieversorgungsnetzwerk. Solche Geräte können auch dazu geeignet sein, alternativ in unterschiedlichen Umgebungen betrieben zu werden, so dass prinzipbedingt ein Diebstahlrisiko für die Geräte besteht. Solche Geräte umfassen beispielsweise ein Audio- oder Video-Unterhaltungssystem oder ein Navigationssystem an Bord eines Verkehrsmittels wie einem Kraftfahrzeug. Auch kann ein Gerät wie ein tragbarer Computer innerhalb eines Unternehmens, einer industriellen Anlage oder in einem privaten Bereich ein solches Gerät darstellen.

Manche Geräte sollen auch aus anderen Gründen zum Betrieb in einer vorbestimmten Umgebung eingeschränkt werden, beispielsweise im Fall einer eingeschränkten Lizenz für eine Software, die auf dem Gerät installiert ist. Es kann auch ein Bedarf bestehen, den unkontrollierten Austausch von Geräten zwischen unterschiedlichen Umgebungen zu verhindern, beispielsweise beim Handel gebrauchter Geräte als Ersatzteile für Verkehrsmittel wie Schiffe, Kraft- oder Luftfahrzeuge. Dadurch soll eine Betriebssicherheit der betreffenden Umgebung bzw. des Verkehrsmittels gesteigert und eine Irreführung eines Betreibers durch Versorgung mit verschlissenen, unkorrekt bezeichneten oder zugeordneten Geräten verhindert werden.

Zum Schutz derartiger Geräte ist es bekannt, beispielsweise ein Bedienelement oder einen elektronischen Schlüssel des Geräts entfernbar zu gestalten, wobei das Gerät ohne das entfernte Element nicht betriebsfähig ist. Es ist auch bekannt, das Gerät in eine Diebstahlschutzzustand zu verbringen, wenn seitens des Geräts ein Trennen von einem Bordnetz, das Teil der Umgebung ist, erfasst wurde. Das Gerät muss dann für einen weiteren Betrieb entsperrt werden, beispielsweise durch Eingabe eines vorbestimmten Codes.

DE 100 15 307 A1 beschreibt ein Verfahren zum Schutz miteinander vernetzter Geräte vor Diebstahl, wobei die Geräte untereinander individuelle Kennungen austauschen. Stimmen in einem der Geräte die empfangenen Kennungen nicht mit vorbestimmten Kennungen überein, so wird das betreffende Gerät in einen Diebstahlschutzzustand verbracht.

EP 0 291 827 A2 zeigt eine Technik zur Sicherung eines Autoradios, bei der eine Impedanz einer Leitung bestimmt wird, die mit dem Autoradio verbunden ist. Ist die bestimmte Impedanz signifikant verschieden von einer vorbestimmten Impedanz, so wird die Funktion des Autoradios verhindert.

US 2010/0180350 A1 betrifft eine Sicherheitseinrichtung für ein Computernetzwerk. An einer zentralen Stelle des Computernetzwerks werden Leitungen, die zu Computereinrichtungen führen, mittels Signalen und deren Reflektionen untersucht. So kann ein entwendeter Computer erfasst werden.

Der Erfindung liegt die Aufgabe zugrunde, eine einfache und flexible Bindung eines elektrischen Geräts an eine vorbestimmte Betriebsumgebung bereitzustellen, um einen verbesserten Schutz gegen unbefugtes Entfernen oder Hinzufügen des Geräts aus einer bzw. in eine andere als eine vorbestimmte Betriebsumgebung zu bewirken.

Die Erfindung löst die Aufgabe mittels eines Systems, eines Verfahrens und eines Computerprogrammprodukts mit den Merkmalen der unabhängigen Ansprüche. Unteransprüche geben bevorzugte Ausführungsformen an.

### Offenbarung der Erfindung

Ein erfindungsgemäßes System zum Schutz eines mit einem elektrischen Leitungssystem verbindbaren elektrischen Geräts, wobei das Leitungssystem eine Vielzahl hintereinander liegender Abschnitte umfasst und am Ende eines der Abschnitte ein Impedanzübergang erfolgt, umfasst einen Signalgenerator zum Erzeugen eines Signals im Leitungssystem, eine Abtasteinrichtung zum Abtasten eines am Impedanzübergang reflektierten Signals, im Leitungssystem, eine Bestimmungseinrichtung, die dazu eingerichtet ist, auf der Basis des Signals und des reflektierten Signals eines physikalische Länge eines der Abschnitte zu bestimmen, und eine Steuereinrichtung zur Einschränkung einer Funktionalität des Geräts, falls die bestimmte physikalische Länge um mehr als ein vorbestimmtes Maß von einer vorbestimmten physikalischen Länge abweicht.

Vorteilhafterweise kann eine Bindung des Geräts an das Leitungssystem auf der Basis einer elektrischen Abtastung des Leitungssystems durch das Gerät erfolgen. Insbesondere dann, wenn das elektrische Leitungssystem nur mit hohem Aufwand von einer physikalischen Umgebung des Geräts trennbar ist, kann auf diese Weise auch eine effiziente Bindung des Geräts an die Umgebung implementiert sein. So kann ein unbefugter Betrieb des Geräts an einem anderen als einem vorbestimmten Leitungssystem bzw. in einer anderen als einer vorbestimmten Umgebung verhindert werden.

Allgemein umfasst das Leitungssystem eine Vielzahl von Leitungen, die jeweils an wenigstens einem Punkt mit einem Gerät verbunden sind. Abschnitte des Leitungssystems weisen eine Impedanz auf und sind generell passive Elemente.

Ist das Leitungssystem beispielsweise in Form eines Kabelbaums in einem Kraftfahrzeug installiert, so kann ein Austausch des Leitungssystems zum Ermöglichen des Betriebs des Geräts in einem anderen Kraftfahrzeug unverhältnismäßig erscheinen, da der Kabelbaum eingehend mit dem Kraftfahrzeug verbunden ist und ein Austausch umfangreiche Montagearbeiten erfordert. Aus diesem Umstand kann sich auch eine erhöhte Abschreckungswirkung ergeben, so dass eine Wahrscheinlichkeit für einen Diebstahl des Geräts reduziert sein kann.

Auch ein Leitungssystem in Form einer elektrischen Installation eines Gebäudes kann derart eingehend mit dem Gebäude verbunden sein, beispielsweise durch Verlegung von Leitungen unter Putz, im Estrich oder in Beton, dass der Aufwand zum Ausbau dieses Leitungssystems in keinem attraktiven Verhältnis zum erzielbaren Erlös steht. Ein hinreichend exakter Nachbau des Leitungssystems kann durch nachfolgend beschriebene Ausführungsformen der Erfindung zusätzlich erschwert werden.

Auf der Basis der Vielzahl bestimmter Eigenschaften des Leitungssystems kann gewissermaßen ein individueller Fingerabdruck des Leitungssystems erstellt werden, mit dem das Gerät verbunden ist. Stimmt der bestimmte Fingerabdruck mit einem vorbestimmten Fingerabdruck überein, so befindet sich das Gerät in einem zugeordneten Heimatnetz, in dem es betrieben werden kann, andernfalls in einem Fremdnetz, wo die Funktionalität des Geräts eingeschränkt wird, beispielsweise durch Verbringen des Geräts in einen Diebstahlschutzzustand.

Die Abschnitte des Leitungsstands können sich auf elektrische Leitungen beziehen, die für einen üblichen Betrieb des Geräts ohnehin erforderlich sind, beispielsweise eine Stromverbindung, eine Datenverbindung oder eine Signalverbindung.

Die die physikalischen Eigenschaften können individualisierte Signalübertragungseigenschaften umfassen. Somit kann das Leitungssystem insbesondere einen Abschnitt umfassen, dessen physikalischen Eigenschaften gezielt so individualisiert sind, dass es sich zur Bestimmung des Umfelds eignet.

Der Signalgenerator und die Abtasteinrichtung können von unterschiedlichen elektrischen Geräten umfasst sein, die mit dem Leitungssystem verbunden sind. Damit kann das Leitungssystem bzw. das Umfeld nicht nur einseitig von einem mit dem Leitungssystem verbundenen Gerät durchgeführt werden, sondern zwei oder mehrere Geräte können zusammenwirken, um die physikalischen Eigenschaften des Leitungssystems zu bestimmen. Die Bestimmung kann dadurch genauer sein, außerdem kann eine Plausibilisierung durch mehrfache Bestimmung von einem Abschnitt des Leitungsnetzes erfolgen. Dadurch kann die Bestimmung genauer und damit aussagekräftiger sein.

Das elektrische Leitungssystem umfasst mehrere Abschnitte und die abgetasteten Eigenschaften können auf einem Impedanzübergang am Ende eines der Abschnitte basieren. Eine Bestimmung des Impedanzübergangs kann einfach und schnell durchführbar sein, wobei die Bestimmung unter Umständen auch während eines laufenden Betriebs des Abschnitts störungsarm durchgeführt werden kann. Außerdem kann eine Vielzahl von hintereinander liegenden Abschnitten des Leitungsnetzes messtechnisch überprüft werden, wodurch eine hohe Aussagekraft der Bestimmung erzielbar sein kann.

In einer weiteren Ausführungsform kann die Messeinrichtung dazu eingerichtet sein, auf der Basis des Signals und des reflektierten Signals eine Signaldämpfung zu bestimmen. Dadurch kann ein weiteres Charakteristikum des Leitungsnetzes erfasst werden, auf dessen Basis eine Identifikation des Leitungsnetzes bzw. der Umgebung erfolgen kann.

Ferner können frequenzabhängige Eigenschaften des elektrischen Leitungssystems bestimmbar sein, indem der Signalgenerator dazu eingerichtet ist, Signale unterschiedlicher Frequenzen zu erzeugen. Dadurch kann eine hohe Bestimmungsgenauigkeit erzielbar sein, so dass ein Aufwand, der zur Rekonstruktion eines Abschnitt des Leitungssystems mittels einer nicht zu dem Leitungssystem gehörenden Vorrichtung so weit erschwert sein kann, dass die Rekonstruktion nicht wirtschaftlich ist.

Es kann ein Schalter zur selektiven Veränderung der Signalübertragungseigenschaften des Leitungssystems vorgesehen sein. Trotzdem das Leitungssystem elektrisch passiv ist, können während unterschiedlicher Schalterstellungen eine gesteigerte Anzahl Messwerte des Leitungssystems bestimmbar sein, wodurch die Identifikation des Leitungssystems weiter verbessert sein kann. Der Schalter kann an einer anderen Stelle am Leitungssystem vorgesehen sein als im Bereich des Signalgenerators oder der Abtasteinrichtung. Insbesondere kann der Schalter zum Kurzschließen zweier elektrischer Leiter verwendet werden, um eine Signalreflektion am Kurzschluss zu maximieren. Der Schalter kann auch zur Variation der Impedanz in diesem Bereich auf einen anderen Wert verwendet werden. Durch einen Schalter mit gesicherten Schalterstellungen kann eine Analyse bzw. Rekonstruktion des elektrischen Leitungsnetzes massiv erschwert werden. Dadurch kann der Schutz des elektrischen Geräts weiter steigerbar sein.

Ein erfindungsgemäßes Verfahren zum Schutz eines mit einem elektrischen Leitungssystem verbundenen Geräts, wobei das Leitungssystem eine Vielzahl hintereinander liegender Abschnitte umfasst und am Ende eines der Abschnitte ein Impedanzübergang erfolgt, umfasst Schritte des Erzeugens eines Signals im Leitungssystem, des Abtastens eines am Impedanzübergang reflektierten Signals , im Leitungssystem, des Bestimmens einer physikalischen Länge des Abschnitts auf der Basis des Signals und des reflektierten Signals und des Einschränkens einer Funktionalität des Geräts, falls die bestimmte physikalische Länge um mehr als ein vorbestimmtes Maß von einer vorbestimmten physikalischen Länge abweicht.

Erfindungsgemäß kann anhand der abgetasteten Eigenschaften bestimmt werden, ob das angeschlossene Leitungssystem ein Heimatnetz ist, in dem das Gerät normal betreibbar sein soll, oder ein Fremdnetz, in dem das Gerät zumindest vorübergehend nur eingeschränkt oder gar nicht betreibbar sein soll.

Es kann eine einzige kombinierten Kenngröße auf der Basis der abgetasteten Eigenschaften bestimmt werden, die vergleichbar mit einem Fingerabdruck oder einem kryptographischen Hash-Wert sein kann. Die bestimmte Kenngröße kann charakteristisch für ein individuelles Leitungssystem sein, so dass der Vergleich der bestimmten Eigenschaften mit den vorbestimmten Eigenschaften einen Vergleich der Kenngröße mit einer vorbestimmten Kenngröße umfassen kann.

Erfindungsgemäß kann die Schutzeinrichtung auch dazu eingerichtet sein, mehrere Bestimmungen verschiedener Eigenschaften des Leitungssystems miteinander in ein Verhältnis zu setzen, etwa Impedanz- oder Laufzeitunterschiede, und diese Verhältnisse mit vorbestimmten Verhältnissen entsprechender Eigenschaften vergleichen.

In einer Ausführungsform ist das vorbestimmte Maß ein zeitabhängiger Wert, so dass das Gerät erst dann in seiner Funktionalität beschränkt wird, wenn sich eine Abweichung der physikalischen Länge von der vorbestimmten Länge schneller als ein weiteres vorbestimmtes Maß verändert.

Dadurch können schleichende Veränderungen der abgetasteten Längen und insbesondere Impedanzen, die sich beispielsweise wegen einer Alterung von Abschnitten des Leitungssystems oder aufgrund von thermischen Einflüssen auf einen der Abschnitte ergeben können, berücksichtigt werden. Ein fehlerhaftes Einschränken der Funktionalität des Geräts kann dadurch vermieden werden.

Ein Abschnitt des Leitungssystems, das zwei Geräte miteinander verbindet, kann nacheinander von beiden Seiten abgetastet werden, wonach die Ergebnisse der Abtastungen miteinander verglichen werden. So lässt sich eine Fälschungs- bzw. Emulationssicherheit des entsprechenden Abschnitts des Leitungssystems weiter erhöhen. Insbesondere die Ersetzung eines Abschnitts durch einen längeren Umwegspfad, der eventuell mit vertretbarem Aufwand realisierbar ist, kann hierdurch erkannt werden. Die Signalgeschwindigkeit des Abschnitts des heimatlichen Leitungssystems kann nahe der Lichtgeschwindigkeit im Vakuum liegen, so dass der längere Umgehungspfad nicht durch Verwendung eines Leitungsabschnitts mit erhöhter Signalgeschwindigkeit kompensiert werden kann.

In einer weiteren Ausführungsform des Verfahrens kann auch eine Signalausbreitungsgeschwindigkeit als Eigenschaft eines Abschnitts des Leitungssystems bestimmt werden. Diese Bestimmung kann auch relativ, d. h. bezogen auf die Signalausbreitungsgeschwindigkeit in einem anderen Abschnitt, erfolgen.

Ferner betrifft die Erfindung ein Computerprogrammprodukt mit Programmcodemitteln zur Durchführung des beschriebenen Verfahrens, wenn das Computerprogrammprodukt auf einer Verarbeitungseinrichtung ausgeführt wird oder auf einem computerlesbaren Datenträger gespeichert ist.

Im Folgenden wird die Erfindung mit Bezug auf die beigefügten Figuren näher beschrieben, in denen:
- Figur 1: ein Bordnetz eines Kraftfahrzeugs;
- Figur 2: eine Twisted-Pair-Verbindung im Bordnetz von Figur 1;
- Figur 3: eine Koaxialkabelverbindung im Bordnetz von Figur 1; und
- Figur 4: ein Ablaufdiagramm eines Verfahrens
darstellt.

### Genaue Beschreibung von Ausführungsbeispielen

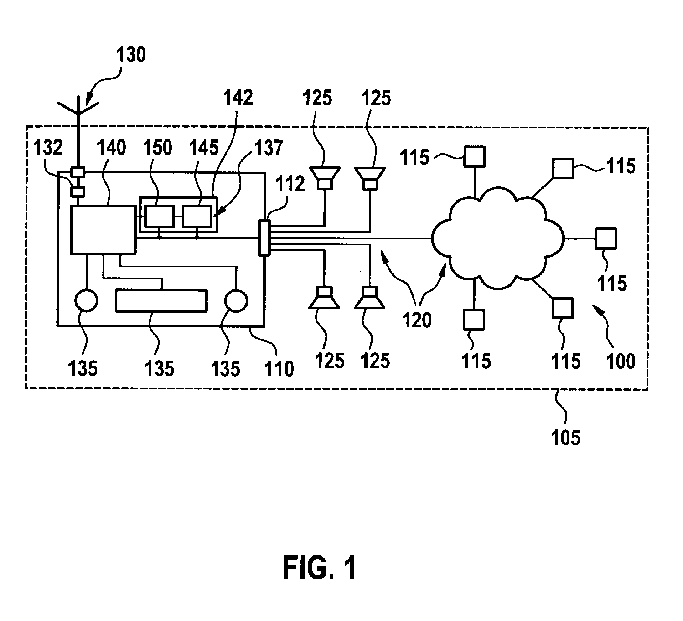

Figur 1 zeigt ein Bordnetz 100 eines Kraftfahrzeugs 105. Das Bordnetz 100 umfasst ein Gerät 110 und eine Anzahl weiterer Geräte 115, die mittels eines Leitungssystems 120 des Bordnetzes 100 miteinander verbunden sind. Das Leitungssystem 120 kann Zwei-Punkt-Verbindungen zwischen Geräten, MehrPunkt-Verbindungen zwischen drei oder mehr Geräten und/oder Stichleitungen umfassen.

Das Leitungssystem 120 stellt eine exemplarische Ausführungsform eines allgemeinen elektrischen Leitungssystems dar, das eine elektrische Umgebung des Geräts 110 definiert, und das Gerät 110 ist ein exemplarisches elektrisches Gerät, das mit dem Leitungssystem verbunden ist. In anderen Ausführungsformen der Erfindung kann das Leitungssystem 120 auch außerhalb des Kraftfahrzeugs 105 installiert sein, beispielsweise in einem Gebäude, einer Industrieanlage, einer Datenverarbeitungsanlage, einer Schaltzentrale, einem Rechenzentrum, einer Steuereinrichtung oder einer beliebigen anderen technischen Einrichtung, in der Geräte mittels elektrischer Leitungen miteinander verbunden sind.

Das Leitungssystem 120 ist vorzugsweise derart mit seiner physikalischen Umgebung verbunden, dass ein Austausch bzw. eine Manipulation des Leitungssystems 120 aufwändig ist. Ferner weist das Leitungssystem 120 eine Anzahl Abschnitte mit elektrisch erfassbaren Eigenschaften auf, deren Kombination in ausreichender Näherung individuell für das Leitungssystem 120 ist, und dadurch eine Identifikation dessen physikalischer Umgebung, hier des Kraftfahrzeugs 105, erlaubt.

In Form eines nicht einschränkenden Beispiels handelt es sich bei dem Gerät 110 um ein Autoradio, wobei vier der weiteren Geräte 115 Lautsprecher 125 sind, die im Kraftfahrzeug 105 vorne und hinten jeweils links und rechts angebracht sind. In weiteren Ausführungsformen kann das Gerät 110 auch ein anderes Gerät an Bord des Kraftfahrzeugs 105 sein, beispielsweise ein Navigationsgerät oder ein Video-Anzeigegerät, und die weiteren Geräte 115, mit denen das Gerät 110 mittels des Leitungssystems 120 verbunden ist, können beliebige aktive oder passive elektrische Komponenten sein. Insbesondere kann das Gerät 110 ein beliebiges Steuergerät an Bord des Kraftfahrzeugs 105 umfassen, beispielsweise ein Steuergerät für eine Wegfahrsperre oder ein Speichergerät für einen Kilometerstand des Kraftfahrzeugs 105.

Das Autoradio 110 ist mittels einer Schnittstelle 112 mit dem Leitungssystem 120 und darüber hinaus mit einer Antenne 130 verbunden. Vom Autoradio 110 umfasst sind Bedienelemente 135 zur Interaktion mit einem Benutzer, eine Funkempfangseinrichtung 132 und eine Schutzeinrichtung 137, die eine Steuereinrichtung 140 und eine Messeinrichtung 142 umfasst. Die Messeinrichtung 142 umfasst einen Signalgenerator 145 und eine Abtasteinrichtung 150, die innerhalb der Messeinrichtung 142 miteinander verbunden sind.

Die Funkempfangseinrichtung 132 ist mit der Antenne 130, dem Leitungssystem 120, insbesondere den einzeln dargestellten Zuleitungen zu den Lautsprechern 125, und der Steuereinrichtung 140 verbunden. Die Steuereinrichtung 140 ist innerhalb des Geräts 110 mit der Funkempfangseinrichtung 132, den Bedienelementen 135, dem Leitungssystem 120 und der Messeinrichtung 142 verbunden und kann außer einer Schutzfunktion noch weitere Funktionen des Autoradios 110 unterstützen, beispielsweise eine Wiedergabesteuerung. Der Signalgenerator 145 und die Abtasteinrichtung 150 sind innerhalb des Autoradios 110 jeweils mit der Leitung verbunden, die die Steuereinrichtung 140 mit der Schnittstelle 122 und dem Leitungssystem 120 verbindet. Diese Leitung kann auch mehrfach ausgeführt sein. Die Messeinrichtung 150 ist ferner mit der Steuereinrichtung 140 verbunden.

Zu vorbestimmten Zeitpunkten, beispielsweise periodisch, und/oder ereignisgesteuert, etwa jedes Mal nach dem Einschalten des Autoradios 110, werden mittels des Signalgenerators 145 und der Abtasteinrichtung 150 eine Vielzahl elektrisch erfassbarer Eigenschaften von Abschnitten des Leitungssystems 120 bestimmt. Dabei können mehrere der Abschnitte in Serie geschaltet sein und eine elektrische Verbindung zweier Geräte 110, 115 innerhalb des Leitungssystems 120 bilden oder elektrisch voneinander isoliert sein. Dazu können der Signalgenerator 145 und die Abtasteinrichtung 150 einzeln oder gemeinsam mit den unterschiedlichen Abschnitten des Leitungssystems 120 verbunden werden. In Summe ergeben die bestimmten, elektrisch erfassbaren Eigenschaften ein Profil, das auf das individuelle Leitungssystem 120 und somit auf das individuelle Kraftfahrzeug 105 hinweist.

Die erfassten Eigenschaften werden mittels der Steuereinrichtung 140 mit abgespeicherten Eigenschaften verglichen. Ergeben sich dabei Abweichungen, die ein vorbestimmtes Maß übersteigen, so wird daraus geschlossen, dass sich das Autoradio 110 nicht an Bord desjenigen Kraftfahrzeugs 105 befindet, in dem es zum rechtmäßigen Betrieb vorgesehen ist. Daraufhin verbringt die Steuereinrichtung 140 das Autoradio 110 in einen Diebstahlschutzzustand, in dem ein normaler Betrieb des Autoradios 110 nicht mehr möglich ist. Der Diebstahlschutzzustand kann beispielsweise in der Unterdrückung einer Ausgabe an die Lautsprecher 125 oder einer Ausgabe eines Warntons über die Lautsprecher 125 bestehen. Auf einem optischen Bedienelement 135 kann ferner ein Hinweis auf den Diebstahlschutzzustand ausgegeben werden.

Der Diebstahlschutzzustand kann in einer Ausführungsform auch wieder verlassen werden, indem beispielsweise ein Authentifizierungscode eines der Bedienelemente 135 eingegeben wird. Alternativ oder zusätzlich kann ein externes Gerät, beispielsweise eine Chipkarte oder ein Laborgerät, erforderlich sein, um das Autoradio 110 aus dem Diebstahlschutzzustand in einen Normalzustand zu verbringen, in dem es in üblicher Weise als Autoradio verwendet werden kann. Eine vergleichbare Prozedur kann auch erforderlich sein, wenn das Autoradio 110 erstmalig in das Kraftfahrzeug 105 eingebaut und mit dessen Leitungssystem 120 verbunden wird. Das Autoratio 110 kann dem Leitungssystem 120 bzw. dem Kraftfahrzeug 105 zugeordnet werden, indem mittels des Signalgenerators 145 und der Abtasteinrichtung 150 elektrisch erfassbare Eigenschaften des Leitungssystems 120 bestimmt werden und die bestimmten elektrisch erfassbaren Eigenschaften in einem Speicher abgelegt werden. Der Speicher kann in die Steuereinrichtung 140 integriert sein.

In einer alternativen Ausführungsform können die elektrisch erfassbaren Eigenschaften auch mittels des Laborgeräts ermittelt und über eine Schnittstelle im Speicher abgelegt werden. Dadurch ist die Zuordnung des Autoradios 110 zum Leitungssystem 120 bzw. dem Kraftfahrzeug 105 abgeschlossen und der normale Betrieb des Autoradios 110 im Bordnetz 100 ermöglicht.

In einer bevorzugten Ausführungsform sind der Signalgenerator 145 und/oder die Abtasteinrichtung 150 manipulationsgesichert mit der Steuereinrichtung 140 integriert, beispielsweise in Form eines anwenderspezifischen Integrierten Schaltkreises (ASIC) oder eines Einchip-Mikrocomputers mit integrierten Peripheriebausteinen.

Die elektrisch erfassbaren Eigenschaften des Leitungssystems 120 basieren auf unterschiedlichen Impedanzen unterschiedlicher Abschnitte des Leitungssystems 120. Beispielsweise können Impedanzen einzelner Abschnitte des Leitungssystems 120 bestimmt werden. Die elektrisch erfassten Eigenschaften können verwendet werden, um physikalische Eigenschaften eines Abschnitts des Leitungssystems 120 zu bestimmen. Kombinationen von bestimmten Impedanzen können beispielsweise eine Bestimmung eines Dämpfungsfaktors erlauben. Ferner kann ein Übergang von Impedanzen an zwei miteinander verbundenen Abschnitten mit unterschiedlichen Impedanzen bestimmt werden. Aufgrund der Reflexionseigenschaften eines solchen Impedanzübergangs kann eine Laufzeitmessung eines Signals durch einen der Abschnitte erfolgen und auf der Basis der Laufzeitmessung kann eine physikalische Länge des Abschnitts bestimmt werden.

Zur Bestimmung der Länge eines Kabelabschnitts erzeugt der Signalgenerator 145 einen Impuls oder ein anderes Signal an dem verbundenen Abschnitt und die Abtasteinrichtung 150 bestimmt eine Laufzeit, bis der erzeugte Impuls zur Messeinrichtung zurück reflektiert wurde. Ein Signalstärkenverhältnis zwischen dem ausgesandten Impuls und dem reflektierten Impuls weist auf das Maß einer Impedanzänderung an zwei aneinander angrenzenden Kabelabschnitten hin. Dabei kann einer der Abschnitte durch das weitere Gerät 115 gebildet sein. Im Fall mehrerer in Serie miteinander verbundener Abschnitte können mehrere Reflexionen erfasst und auch Eigenschaften von Abschnitten, die nicht an das Gerät 110 angrenzen, bestimmt werden.

Zur Bestimmung von frequenzabhängigen Veränderungen der Impedanz erzeugt der Signalgenerator 145 nacheinander Signale unterschiedlicher Frequenzen, beispielsweise durch Überstreichen eines vorbestimmten Frequenzbereichs ("sweep"). Die Messeinrichtung 142 bestimmt daraufhin, welcher Anteil des erzeugten Signals nach Reflexionen im betreffenden Kabelabschnitt zur Messeinrichtung 142 zurückgeworfen wird.

Die Bestimmung der elektrischen Eigenschaften erfolgt nach Möglichkeit derart, dass ein normaler Kommunikations- bzw. Energieübertragungsbetrieb des Leitungssystems 120 unbeeinträchtigt ist. Dies betrifft sowohl einen Messzeitpunkt als auch die durch den Signalgenerator 145 erzeugten Messsignale. Beispielsweise können elektrische Eigenschaften von Kabeln, die das Autoradio 110 mit den Lautsprechern 125 verbinden, derart bestimmt werden, dass das erzeugte Messsignal eine zu geringe Amplitude aufweist, um zu einer als störend wahrnehmbaren akustischen Ausgabe über die Lautsprecher 125 zu führen. Alternativ oder zusätzlich kann das Messsignal in einem Frequenzbereich liegen, der für das menschliche Ohr unhörbar ist, etwa oberhalb von ca. 30.000 Hz. Das Messsignal kann auch so kurz sein, dass es akustisch kaum wahrnehmbar ist oder nicht als störend empfunden wird. In einer weiteren Ausführungsform erfolgt die Bestimmung der elektrischen Eigenschaften, wenn sich kein Insasse im Kraftfahrzeug 105 befindet, etwa wenn das Kraftfahrzeug 105 parkfertig abgestellt ist.

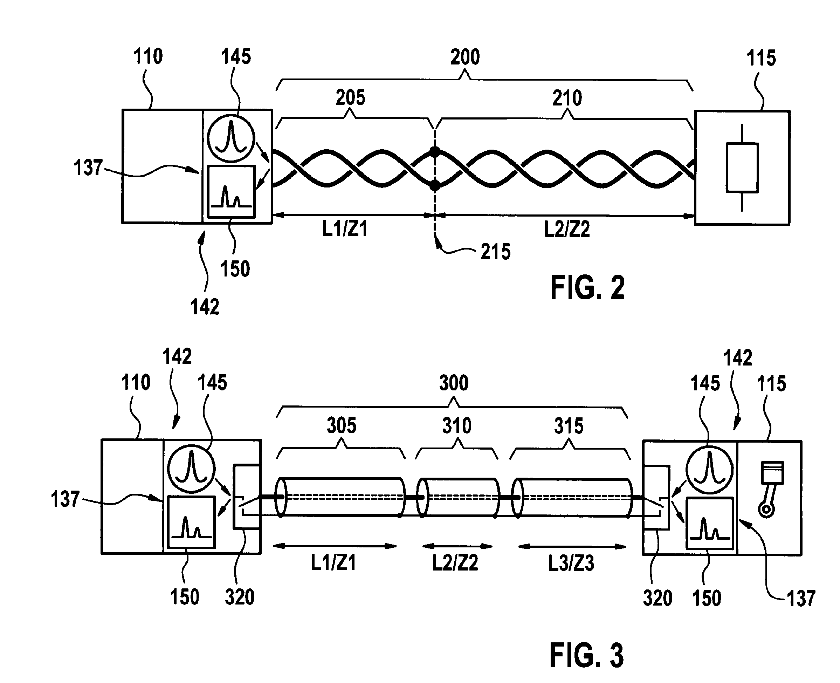

Figur 2 zeigt eine Twisted-Pair-Verbindung 200 im Bordnetz 100 des Kraftfahrzeugs 105 von Figur 1.

An einem linken Ende der Verbindung 200 ist ein Gerät 110, beispielsweise das Autoradio 110 aus Figur 1, verbunden. An einem rechten Ende der Verbindung 200 ist eines der weiteren Geräte 115 aus Figur 1 verbunden. Die Verbindung 200 umfasst einen ersten, links dargestellten Abschnitt 205 und einen zweiten, rechts dargestellten Abschnitt 210. Der erste Abschnitt 205 weist eine erste Länge L1 und eine erste Impedanz Z1 auf, der zweite Abschnitt 210 weist eine zweite Länge L2 und eine zweite Impedanz Z2 auf.

An einem Übergang 215 zwischen dem ersten Abschnitt 205 und dem zweiten Abschnitt 210 entlang der Verbindung 200 erfolgt eine Änderung der Impedanz von Z1 auf Z2. Ein durch den Signalgenerator 145 am linken Ende der Verbindung 200 erzeugter einzelner, steilflankiger Impuls läuft durch den ersten Abschnitt 205 nach rechts und wird am Übergang 215 zum zweiten Abschnitt 210 aufgrund der Impedanzänderung teilweise nach links zurückreflektiert. Mittels der Abtasteinrichtung 150 wird eine Zeit T1 bestimmt, die zwischen dem Aussenden des Impulses durch den Signalgenerator 145 und dem Eintreffen des teilweise reflektierten Impulses verstreicht. Auf der Basis einer bekannten Ausbreitungsgeschwindigkeit elektrischer Impulse in der Verbindung 200 kann daraufhin die Länge L1 des ersten Abschnitts bestimmt werden.

Der Teil des ausgesandten Impulses, der am Übergang zwischen dem ersten Abschnitt 205 und dem zweiten Abschnitt 210 nicht nach links zurückreflektiert wird, läuft weiter nach rechts bis zum weiteren Gerät 115. In Abhängigkeit einer Eigenimpedanz des weiteren Geräts 115 wird wieder ein Teil des eintreffenden Impulses nach links zurückreflektiert und durchläuft die Verbindung 200 bis zum Gerät 110, wo er von der Abtasteinrichtung 150 registriert wird. Aus einem Zeitabstand T2 zwischen dem Aussenden des ursprünglichen Impulses durch den Signalgenerator 145 und dem Eintreffen des am weiteren Gerät 115 reflektierten Teils des Impulses kann, wie oben beschrieben wurde, die Länge L1 + L2 des Abschnitts 205 bestimmt werden. In Kenntnis der Länge L1 kann somit auch die Länge L2 des zweiten Abschnitts 210 bestimmt werden. Ferner kann auf der Basis eines Vergleichs der Amplituden des ausgesandten Impulses des am Übergang 215 zwischen dem ersten Abschnitt 205 und dem zweiten Abschnitt 210 reflektierten Impulses und des am weiteren Gerät 115 reflektierten Impulses bestimmt werden, welche Impedanzen Z1 bzw. Z2 die Abschnitte 205, 210 aufweisen.

In weiteren Ausführungsformen ist es auch möglich, mehr als zwei Abschnitte 205, 210 innerhalb der Verbindung 200 vorzusehen. Eine Bestimmung von Längen und Impedanzen der weiteren Abschnitte erfolgt in entsprechender Weise. In einer anderen Ausführungsform umfasst die Verbindung 200 nur einen einzigen Abschnitt.

Figur 3 zeigt eine Koaxialkabelverbindung 300 im Bordnetz 100 aus Figur 1. Im gleicher Weise wie in der in Figur 2 dargestellten Ausführungsform ist an einem linken Ende der Verbindung 300 das Gerät 110 aus Figur 1 angeschlossen und an einem rechten Ende eines der weiteren Geräte 115 aus Figur 1. Die Verbindung 300 umfasst einen ersten Abschnitt 305 mit einer ersten Länge L1 und einer ersten Impedanz Z1, einen zweiten Abschnitt 310 mit einer zweiten Länge L2 und einer zweiten Impedanz L2 sowie einen dritten Abschnitt 315 mit einer dritten Länge L3 und einer dritten Impedanz Z3. Die Bestimmung der Längen L1 bis L3 sowie der Impedanzen Z1 bis Z3 bzw. derer Verhältnisse erfolgt wie oben mit Bezug auf Figur 2 beschrieben ist.

Das weitere Gerät 115 kann ein Steuergerät sein, welches dazu ausgebildet ist, die Bestimmung der elektrischen Eigenschaften der Verbindung 300 zu unterstützen. Beispielsweise kann es sich bei dem weiteren Gerät 115 um eine Wegfahrsperre oder eine Motorsteuerung eines Antriebsmotors des Kraftfahrzeugs 105 aus Figur 1 handeln.

Optional kann das weitere Gerät 115 einen Schalter 320 zur Verbindung eines Innenleiters mit einem Außenleiter der Koaxialverbindung 300 umfassen. Ist der Schalter 320 geschlossen, so wird ein von links entlang der Verbindung 300 laufender elektrischer Impuls am Schalter 320 annähernd vollständig reflektiert, so dass der zurücklaufende Impuls annähernd die gleiche Amplitude wie der eintreffende Impuls hat. Dadurch kann mittels der Messeinrichtung 142 des Geräts 110 eine verbesserte Abtastung der eintreffenden Impulse durchgeführt werden. Der Schalter 320 kann beispielsweise periodisch oder nach Aufforderung durch das Gerät 110 während eines Zeitraums geschlossen werden, der für die Messung der elektrischen Eigenschaften der Verbindung 300 erforderlich ist. Die Aufforderung kann beispielsweise mittels einer weiteren Verbindung oder durch einen Datenverkehr auf der Verbindung 300 vom Gerät 110 an das weitere Gerät 115 übermittelt werden.

In einer weiteren, in Figur 3 dargestellten Ausführungsform umfasst auch das weitere Gerät 115 eine Messeinrichtung 142 mit einem Signalgenerator 145 und einer Abtasteinrichtung 150. Dadurch ist auch das weitere Gerät 115 in der Lage, seinerseits die Längen L1 bis L3 und die Impedanzen Z1 bis Z3 bzw. deren Verhältnisse zu bestimmen. Auf der Seite des linken Geräts 110 kann ein weiterer Schalter 320 vorgesehen sein, der auf der linken Seite der Verbindung 300 den Innenleiter mit dem Außenleiter der Koaxialverbindung 300 selektiv verbindet. Der Schalter 320 desjenigen Geräts 110, 115, welches eine Messung elektrischer Eigenschaften der Verbindung 300 durchführt, indem es mittels des jeweiligen Signalgenerators 145 einen Signalimpuls an eines der Enden der Verbindung 300 anlegt, muss während der Messung geöffnet sein. Der jeweils andere Schalter 320 kann ebenfalls geöffnet oder zur Verbesserung der Reflexion des Signalimpulses geschlossen sein. Die Schalter 320 und/oder die zweiseitige Messung sind auch an der Twisted-Pair Verbindung 200 in Fig. 2 verwendbar.

Das Gerät 110 und das weitere Gerät 115 können die jeweils bestimmten elektrischen Eigenschaften L1 bis L3 und Z1 bis Z3 mittels entsprechenden Datenverkehrs untereinander austauschen. In einer Ausführungsform erfolgt dieser Datenverkehr verschlüsselt, um eine Manipulation oder Fälschung von Daten zu verhindern. Seitens des Geräts 110 und/oder des weiteren Geräts 115 können dann die jeweils bestimmten elektrischen Eigenschaften miteinander verglichen werden. Stimmen die bestimmten elektrischen Eigenschaften nicht überein, so kann davon ausgegangen werden, dass es sich nicht um die Leitung 300 handelt, die an Bord des Kraftfahrzeugs 105 vorgesehen ist, sondern um eine andere Leitung, die möglicherweise zu Manipulationszwecken mit künstlichen oder emulierten Längen bzw. Impedanzen versehen ist.

In noch einer weiteren Ausführungsform können elektrisch erfassbare Eigenschaften der Leitung 200 bzw. 300 auch bestimmt werden, indem der Signalgenerator 145 des Geräts 110 ein Signal erzeugt, das mittels der Abtasteinrichtung 150 des weiteren Geräts 115 abgetastet wird. Die in diesem Fall wegfallenden bzw. veränderten Reflexionen sind bei der Auswertung entsprechend zu berücksichtigen.

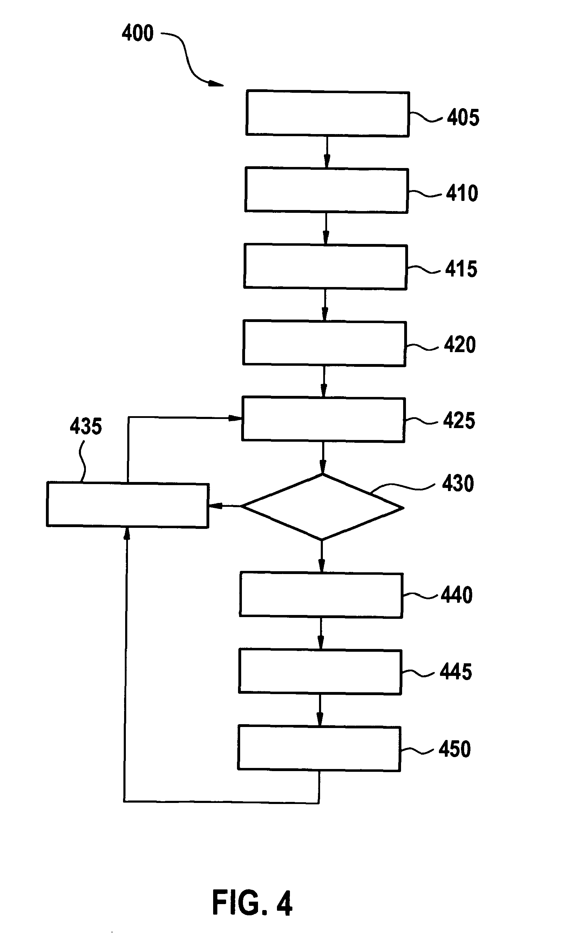

Figur 4 zeigt ein Ablaufdiagramm eines Verfahrens 400. Das Verfahren 400 kann insbesondere am Bordnetz 100 aus Figur 1 unter Verwendung von Verbindungen 200, 300 im Leitungssystem 120 durchgeführt werden.

In einem ersten Schritt 405 wird das Gerät 110 mit dem Bordnetz 100 verbunden. In einem anschließenden Schritt 410 beginnt eine Kalibrierungsphase. Dies kann, wie oben mit Bezug auf Figur 1 erläutert ist, die Eingabe eines Codes oder den Anschluss eines Schlüssels oder eines Laborgeräts an dem Gerät 110 umfassen.

Anschließend werden in einem Schritt 415 elektrische Eigenschaften des Leitungssystems 120 des Bordnetzes 100 bestimmt. Dies kann durch das Laborgerät oder mittels des Signalgenerators 155 und der Abtasteinrichtung 150 des Geräts 110 erfolgen. Die bestimmten Eigenschaften werden anschließend in einem Schritt 420 gespeichert und die Kalibrierungsphase ist beendet.

Die Kalibrierung des Geräts 110 kann auch ohne das Leitungssystem 120 erfolgen, wenn dessen elektrisch erfassbaren Eigenschaften hinreichend genau bekannt sind. Gegebenenfalls genügt zur Kalibrierung eine Bereitstellung der entsprechenden Eigenschaften des Leitungssystems 120 in einem Speicher des Geräts 110.

In einem Schritt 425, der im weiteren Verlauf des Verfahrens 400 beispielsweise bei jedem Einschalten des Geräts 110 durchgeführt werden kann, werden die elektrischen Eigenschaften des Leitungssystems 120 durch das Gerät 110 bestimmt. Anschließend wird in einem Schritt 430 überprüft, ob die im Schritt 425 bestimmten Eigenschaften den im Schritt 420 abgespeicherten Eigenschaften entsprechen.

Dabei können paarweise zueinander korrespondierende abgetastete und gespeicherte Eigenschaften verglichen werden oder die Eigenschaften einer Messung können in ein Profil umgewandelt und das Profil mit einem gespeicherten Profil verglichen werden. Vorzugsweise wird ein Unterschied zwischen den Messungen bzw. Profilen bestimmt und dieser Unterschied wird mit einem vorbestimmten Schwellenwert verglichen.

In einer weiteren Ausführungsform können die elektrischen Eigenschaften eines zwei Schutzeinrichtungen 137 verbindenden Abschnitts des Leitungssystems 120 innerhalb des Schritts 425 nacheinander durch die beiden Schutzeinrichtungen 137 bestimmt und die Bestimmungsergebnisse einer der Schutzeinrichtungen 137 an die andere Schutzeinrichtung 137 übermittelt werden. In der anderen Schutzeinrichtung 137 erfolgt dann eine Überprüfung, ob die Bestimmungsergebnisse einander entsprechen. Ist dies der Fall, kann zusätzlich überprüft werden, ob die Bestimmungsergebnisse den abgespeicherten Eigenschaften entsprechen.

Sind Unterschiede zwischen den Bestimmungsergebnissen der beiden Schutzeinrichtungen 137 bzw. zwischen den Bestimmungsergebnissen einer der Schutzeinrichtungen 137 und den abgespeicherten Eigenschaften kleiner als zugeordnete vorbestimmte Schwellenwerte, so fährt das Verfahren 400 mit dem Schritt 435 fort, in dem das Gerät 110 in normaler Weise betrieben wird.

In einer bevorzugten Ausführungsform wird der Vergleich von Schritt 430 derart durchgeführt, dass langsame Veränderungen elektrischer Eigenschaften des Leitungssystems 120 nicht zu einem Überschreiten des Unterschiedes über den vorbestimmten Schwellenwert führt. Dazu kann beispielsweise der vorbestimmte Schwellenwert zeitabhängig gewählt werden. Alternativ oder zusätzlich können die abgespeicherten elektrischen Eigenschaften im Sinn eines gleitenden Durchschnitts an zurückliegende Bestimmungen des Schritts 425 angepasst werden.

Unterscheiden sich die im Schritt 425 bestimmten Eigenschaften um mehr als den vorbestimmten Schwellenwert von den im Schritt 420 abgespeicherten Eigenschaften oder verändert sich die Differenz aufeinanderfolgend bestimmter Eigenschaften schneller als um ein weiteres vorbestimmtes Maß, so fährt das Verfahren 400 mit einem Schritt 440 fort und verbringt das Gerät 110 in einen Diebstahlschutzzustand. Im Diebstahlschutzzustand ist eine normale Funktionalität des Geräts 110 eingeschränkt.

Um das Gerät 110 aus dem Diebstahlschutzzustand zu holen, wird in einem Schritt 445 eine Authentifizierung durchgeführt, die beispielsweise die Eingabe eines weiteren Codes in das Gerät 110 umfassen kann. Ist die Authentifizierung erfolgreich, so wird das Gerät 110 in einem Schritt 450 reaktiviert, indem der Diebstahlschutzzustand aufgehoben wird. Anschließend kann das Gerät 110 in Schritt 435 normal betrieben werden.

Periodisch oder ereignisgesteuert geht das Verfahren 400 vom Schritt 435 in den Schritt 425 über, um eine erneute Überprüfung des Leitungssystems 120 des Bordnetzes 100, mit dem das Gerät 110 verbunden ist, durchzuführen.

## Patentansprüche

1. System (140, 145, 150) zum Schutz eines mit einem elektrischen Leitungssystem (120) verbindbaren elektrischen Geräts (110), wobei das Leitungssystem (120) eine Vielzahl hintereinander liegender Abschnitte (205, 210, 305, 310, 315) umfasst, am Ende eines der Abschnitte (205, 210, 305, 310, 315) ein Impedanzübergang (215) erfolgt und das System (140, 145, 150) folgendes umfasst:
- einen Signalgenerator (145) zum Erzeugen eines Signals im Leitungssystem (120);
- eine Abtasteinrichtung (150) zum Abtasten eines am Impedanzübergang (215) reflektierten Signals, im Leitungssystem (120);
- eine Bestimmungseinrichtung (140), die dazu eingerichtet ist, auf der Basis des Signals und des reflektierten Signals eine physikalische Länge (L1, L2) eines der Abschnitte (205, 210, 305, 310, 315) zu bestimmen; und
- eine Steuereinrichtung (140) zur Einschränkung einer Funktionalität des Geräts (110), falls die bestimmte physikalische Länge um mehr als ein vorbestimmtes Maß von einer vorbestimmten Länge abweicht.

2. System (140, 145, 150) nach Anspruch 1, **dadurch gekennzeichnet, dass** die physikalischen Eigenschaften individualisierte Signalübertragungseigenschaften umfassen.

3. System (140, 145, 150) nach Anspruch 1 oder 2, **dadurch gekennzeichnet, dass** der Signalgenerator (145) und die Abtasteinrichtung (150) von unterschiedlichen elektrischen Geräten (110, 115) umfasst sind, die mit dem Leitungssystem (120) verbunden sind.

4. System (140, 145, 150) nach einem der vorangehenden Ansprüche, **dadurch gekennzeichnet, dass** die Bestimmungseinrichtung (140) dazu eingerichtet ist, auf der Basis des Signals und des reflektierten Signals eine Signallaufzeit zu bestimmen.

5. System (140, 145, 150) nach einem der vorangehenden Ansprüche, **dadurch gekennzeichnet, dass** die Messeinrichtung (142) dazu eingerichtet ist, auf der Basis des Signals und des reflektierten Signals eine Signaldämpfung zu bestimmen.

6. System (140, 145, 150) nach einem der vorangehenden Ansprüche, **dadurch gekennzeichnet, dass** eine der abgetasteten physikalischen Eigenschaften des elektrischen Leitungssystems (120) frequenzabhängig ist und der Signalgenerator (145) dazu eingerichtet ist, Signale unterschiedlicher Frequenzen zu erzeugen, um diese Eigenschaft für mehrere unterschiedliche Frequenzen zu bestimmen.

7. System (140, 145, 150) nach einem der vorangehenden Ansprüche, **dadurch gekennzeichnet, dass** ein Schalter (320) zur selektiven Veränderung der Signalübertragungseigenschaften des Leitungssystems vorgesehen ist.

8. Verfahren (400) zum Schutz eines mit einem elektrischen Leitungssystem (120) verbundenen Geräts (110), wobei das Leitungssystem (120) eine Vielzahl hintereinander liegender Abschnitte (205, 210, 305, 310, 315) umfasst und am Ende eines der Abschnitte (205, 210, 305, 310, 315) ein Impedanzübergang (215) erfolgt, folgende Schritte umfassend:
- Erzeugen (425) eines Signals im Leitungssystem (120);
- Abtasten (425) eines am Impedanzübergang (215) reflektierten Signals, im Leitungssystem (120);
- Bestimmen (425) einer physikalischen Länge (L1, L2) des Abschnitts (205, 210, 305, 310, 315) auf der Basis des Signals und des reflektierten Signals; und
- Einschränken (440) einer Funktionalität des Geräts (110), falls die bestimmte physikalische Länge (L1, L2) um mehr als ein vorbestimmtes Maß von einer vorbestimmten Länge abweicht.

9. Verfahren nach Anspruch 8, wobei das vorbestimmte Maß ein zeitabhängiger Wert ist, so dass das Einschränken (425) der Funktionalität erst dann erfolgt, wenn sich die Abweichung der bestimmten physikalischen Länge (L1, L2) des Abschnitts (205, 210, 305, 310, 315) des Leitungssystems (120) von der vorbestimmten Länge schneller als ein weiteres vorbestimmtes Maß verändert.

10. Computerprogrammprodukt mit auf einem computerlesbaren Datenträger gespeicherten Programmcodemitteln zur Durchführung des Verfahrens nach einem der Ansprüche 8 oder 9, wenn es auf einer Verarbeitungseinrichtung (140) abläuft.

## Claims

1. System (140, 145, 150) for protecting an electrical device (110) connectable to an electric line system (120), the line system (120) comprising a multiplicity of successive sections (205, 210, 305, 310, 315), an impedance transition (215) taking place at the end of one of the sections (205, 210, 305, 310, 315), and the system (140, 145, 150) comprising the following:
- a signal generator (145) for generating a signal in the line system (120);
- a sampling device (150) for sampling a signal reflected at the impedance transition (215) in the line system (120);
- a determining device (140) which is set up to determine a physical length (L1, L2) of one of the sections (205, 210, 305, 310, 315) on the basis of the signal and the reflected signal; and
- a control device (140) for limiting a functionality of the device (110) if the determined physical length deviates from a predetermined length by more than a predetermined amount.

2. System (140, 145, 150) according to Claim 1, **characterized in that** the physical properties comprise individualized signal transmission properties.

3. System (140, 145, 150) according to Claim 1 or 2, **characterized in that** the signal generator (145) and the sampling device (150) are surrounded by different electrical devices (110, 115) which are connected to the line system (120).

4. System (140, 145, 150) according to one of the preceding claims, **characterized in that** the determining device (140) is set up to determine a signal delay time on the basis of the signal and the reflected signal.

5. System (140, 145, 150) according to one of the preceding claims, **characterized in that** the measuring device (142) is set up to determine a signal attenuation on the basis of the signal and the reflected signal.

6. System (140, 145, 150) according to one of the preceding claims, **characterized in that** one of the sampled physical properties of the electric line system (120) is frequency-dependent, and the signal generator (145) is set up to generate signals of different frequencies in order to determine said property for a plurality of different frequencies.

7. System (140, 145, 150) according to one of the preceding claims, **characterized in that** a switch (320) is provided for selectively changing the signal transmission properties of the line system.

8. Method (400) for protecting a device (110) connected to an electric line system (120), the line system (120) comprising a multiplicity of successive sections (205, 210, 305, 310, 315) and an impedance transition (215) taking place at the end of one of the sections (205, 210, 305, 310, 315), comprising the following steps:
- generating (425) a signal in the line system (120);
- sampling (425) a signal reflected at the impedance transition (215) in the line system (120);
- determining (425) a physical length (L1, L2) of the section (205, 210, 305, 310, 315) on the basis of the signal and the reflected signal; and
- limiting (440) a functionality of the device (110) if the specific physical length (L1, L2) deviates from a predetermined length by more than a predetermined amount.

9. Method according to Claim 8, in which the predetermined amount is a time-dependent value such that the limitating (425) of the functionality takes place only when the deviation of the determined physical length (L1, L2) of the section (205, 210, 305, 310, 315) of the line system (120) of the predetermined length changes more quickly than a further predetermined amount.

10. Computer program product with program code means stored on a computer-readable data carrier for carrying out the method according to either of Claims 8 and 9 when it runs on a processing device (140).

## Revendications

1. Système (140, 145, 150) pour la protection d'un appareil électrique (110) pouvant être relié à un système de lignes électriques (120), le système de lignes (120) comprenant une pluralité de tronçons (205, 210, 305, 310, 315) situés les uns derrière les autres, une transition d'impédance (215) ayant lieu à l'extrémité de l'un des tronçons (205, 210, 305, 310, 315) et le système (140, 145, 150) comprenant ce qui suit :
- un générateur de signaux (145) pour générer un signal dans le système de lignes (120) ;
- un dispositif d'exploration (150) pour explorer un signal, réfléchi au niveau de la transition d'impédance (215), dans le système de lignes (120) ;
- un dispositif de détermination (140), lequel est étudié pour déterminer, sur la base du signal et du signal réfléchi, une longueur physique (L1, L2) de l'un des tronçons (205, 210, 305, 310, 315) ; et
- un dispositif de commande (140) pour la limitation d'une fonctionnalité de l'appareil (110) si la longueur physique déterminée s'écarte de plus d'une grandeur prédéterminée d'une longueur prédéterminée.

2. Système (140, 145, 150) selon la revendication 1, **caractérisé en ce que** les propriétés physiques comprennent des propriétés de transmission de signaux individualisées.

3. Système (140, 145, 150) selon la revendication 1 ou 2, **caractérisé en ce que** le générateur de signaux (145) et le dispositif d'exploration (150) sont englobés par différents appareils électriques (110, 115), lesquels sont reliés au système de lignes (120).

4. Système (140, 145, 150) selon l'une des revendications précédentes, **caractérisé en ce que** le dispositif de détermination (140) est étudié pour déterminer un temps de propagation de signal sur la base du signal et du signal réfléchi.

5. Système (140, 145, 150) selon l'une des revendications précédentes, **caractérisé en ce que** le dispositif de mesure (142) est étudié pour déterminer une atténuation du signal sur la base du signal et du signal réfléchi.

6. Système (140, 145, 150) selon l'une des revendications précédentes, **caractérisé en ce que** l'une des propriétés physiques explorées du système de lignes électriques (120) est fonction de la fréquence, et le générateur de signaux (145) est étudié pour générer des signaux de fréquences différentes afin de déterminer cette propriété pour plusieurs fréquences différentes.

7. Système (140, 145, 150) selon l'une des revendications précédentes, **caractérisé en ce que** l'on prévoit un commutateur (320) pour la modification sélective des propriétés de transmission de signaux du système de lignes.

8. Procédé (400) pour la protection d'un appareil (110) relié à un système de lignes électriques (120), le système de lignes (120) comprenant une pluralité de tronçons (205, 210, 305, 310, 315) situés les uns derrière les autres, et une transition d'impédance (215) ayant lieu à l'extrémité de l'un des tronçons (205, 210, 305, 310, 315), comprenant les étapes suivantes :
- génération (425) d'un signal dans le système de lignes (120) ;
- exploration (425) d'un signal, réfléchi au niveau de la transition d'impédance (215), dans le système de lignes (120) ;
- détermination (425) d'une longueur physique (L1, L2) du tronçon (205, 210, 305, 310, 315) sur la base du signal et du signal réfléchi ; et
- limitation (440) d'une fonctionnalité de l'appareil (110) si la longueur physique (L1, L2) déterminée s'écarte de plus d'une grandeur prédéterminée d'une longueur prédéterminée.

9. Procédé selon la revendication 8, la grandeur prédéterminée étant une valeur dépendant du temps, de sorte que la limitation (425) de la fonctionnalité a lieu seulement si l'écart entre la longueur physique (L1, L2) déterminée du tronçon (205, 210, 305, 310, 315) du système de lignes (120) et la longueur prédéterminée varie plus rapidement qu'une autre grandeur prédéterminée.

10. Produit de programme informatique avec des moyens de codage de programme enregistrés sur un support de données lisible par informatique pour exécuter le procédé selon l'une des revendications 8 ou 9, lorsqu'il tourne sur un dispositif de traitement (140).
